# EUROPÄISCHE PATENTSCHRIFT

(11) **EP 1 946 877 B1**
(45) Veröffentlichungstag und Bekanntmachung des Hinweises auf die Patenterteilung: **17.11.2010**
(21) Anmeldenummer: 07100637.3
(22) Anmeldetag: 17.01.2007
(51) Int. Cl.: B23K 20/12, B23K 20/227, B23K 35/30, B23K 103/04, B23K 103/06

(54) **Reibschweissverfahren**
Friction welding method
Procédé de soudage par friction

(43) Veröffentlichungstag der Anmeldung: 23.07.2008
(73) Patentinhaber: Georg Fischer Automobilguss GmbH, 78221 Singen (DE)
(72) Erfinder: Seidinger, Karl, 78269 Volkertshausen (DE)
(74) Vertreter: Weiss, Wolfgang

(56) Entgegenhaltungen:
- DE-A1-102004 062 491
- DE-C1- 3 644 577
- JP-A- 2001 287 049
- JP-A- 2004 001 087
- RICHTER HELMUT; PALZKILL ALFRED: "Übertragung von Mikroreibschweissversuchen auf bauteilgrosse Proben am Beispiel der Werkstoffkombination Baustahl/Gusseisen mit Kugelgrafit" SCHWEISSEN UND SCHNEIDEN, Bd. 37, Nr. 2, 1985, Seiten 60-65, XP002438869 Duesseldorf

## Beschreibung

Die Erfindung bezieht sich auf ein Reibschweissverfahren zum Herstellen eines Reibschweissteiles gemäß dem Oberbegriff des Anspruchs 1, wobei zwei Verbindungsteile mit Kontaktflächen mit einem Reibdruck in Kontakt gebracht werden, wobei eines der Verbindungsteile relativ zum anderen Verbindungsteil bewegt wird, wobei nach einer Reibzeit die Relativbewegung abgebremst wird, wobei die Verbindungsteile mit einem Stauchdruck, der höher ist als der Reibdruck, gegeneinander gedrückt werden, wobei mindestens eines der Verbindungsteile aus Gusseisen mit Kugelgraphit (=GJS) ausgebildet ist.

Ein solches Verfahren ist aus der JP 2004-001087 bekannt.

Im Kraftfahrzeugbau werden rotationssymmetrische Teile, das heisst rohrförmige oder zylindrische Teile, beispielsweise Wellen, Achsstummeln oder andere Antriebsteile durch Reibschweissen zusammengefügt. Hierbei werden die zusammen zu fügende Teile zu einander gepresst und in einer Relativbewegung zu einander gebracht. Durch die Reibungswärme, die hierbei erzeugt wird, wird das Material plastisch bis schmelzflüssig. Beim Reibschweissen von Gusseisen mit Kugelgraphit kann im Verbindungsbereich das Metallgefüge verändert werden. Einerseits wirken die Graphitkörper als Schmiermittel und erzeugen dadurch zu wenig Reibungswärme, andererseits wird das Gefüge im Verbindungsbereich verändert, so dass die mechanischen Eigenschaften der zusammen gefügten Teile verändert werden.

Aus der EP 273204 B1 ist ein gattungsgemässes Verfahren zum Reibschweissen bekannt. Bei diesem Verfahren wird mittels Reibschweissen eine Verbindung von einem Bauteil aus Stahl mit einem weiteren Bauteil aus Gusseisen mit Kugelgraphit hergestellt. Das verwendete Gusseisen weist eine ferritische Gefügeausbildung mit 280 bis 300 Ferritkörner pro mm² auf. Bei diesem Verbindungsverfahren soll verhindert werden, dass im Verbindungsbereich zuviel Kohlenstoff aus dem Gusseisen in den Stahl diffundiert und dass einerseits die Schmelze mit einem erhöhten Kohlenstoffgehalt aus dem Stauchbereich gepresst wird, jedoch andererseits die Kugelgraphitkörper im Gusseisen nicht zu Lamellen plattiert werden. Dies wird erreicht durch die Einstellung der Reibzeit von etwa 40 s, durch die Einstellung des Stauchdruckes von etwa 86 bar und durch eine Vorbehandlung des Gusseisens im Magnesiumkonverter.

Ausgehend von diesem Stand der Technik ist es Aufgabe der Erfindung, ein Reibschweissverfahren anzugeben, das möglichst reproduzierbar und kostengünstig in einer Serienproduktion angewendet werden kann. Es soll auch ein Reibschweissteil angegeben werden, bei dem die Zugfestigkeitswerte im Verbindungsbereich erhöht werden. Gefügeveränderungen, die eine schlechtere Qualität zur Folge haben, sollen vermieden werden. Eine zeitaufwändige Wärmebehandlung zur Einstellung eines besseren Gefüges soll bei Gusseisen-Gusseisenverbindungen weggelassen werden können.

Diese Aufgabe wird gelöst durch ein Reibschweissverfahren zum Herstellen eines Metallfügeteiles nach Anspruch 1, wobei zwei Verbindungsteile mit Kontaktflächen mit einem Reibdruck in Kontakt gebracht werden, wobei eines der Verbindungsteile relativ zum anderen Verbindungsteil bewegt wird, wobei nach einer Reibzeit die Relativbewegung abgebremst wird und wobei die Verbindungsteile während einer Stauchzeit mit einem Stauchdruck, der höher ist als der Reibdruck, gegeneinander gedrückt werden, wobei mindestens eines der Verbindungsteile aus Gusseisen mit Kugelgraphit (=GJS) ausgebildet ist, wobei im Verbindungsbereich höchstens 20% der Sphärolithen im Gusseisen mit Kugelgraphit deformiert werden und wobei das Gefüge im Gusseisen mit Kugelgraphit zu 30 bis 90 % perlitisch ausgebildet ist.

Bevorzugte Weiterbildungen der Erfindung ergeben sich aus den abhängigen Ansprüchen.

Es ist von Vorteil, dass auch Gusseisenlegierungen mit einer nah-eutektischen Zusammensetzung zusammengefügt werden können. Dies wird dadurch erreicht, dass mindestens eines der Verbindungsteile aus Gusseisen mit Kugelgrapttit mit einer Zusammensetzung, die 3.0 bis 3.9 Gew.% C und 2.0 bis 3.2 Gew.% Si enthält, gebildet ist und wobei das Gefüge zu 30 bis 90 % perlitisch ausgebildet ist.

### Beispiele

Zwei rohrförmige Prüfkörper mit einem Aussendurchmesser von 70 bis 71 mm und einer Wandstärke von 10 bis 11 mm werden auf einer bekannten Reibschweissanlage mit einander verbunden und anschliessend auf Festigkeit geprüft. Die Reibzeit beträgt 10 bis 20 sec, der Druck beim Reiben 25 bis 45 MPa, und der Druck beim Stauchen 100 bis 220 MPa, je nach der verwendeten Werkstoffpaarung. Die Verbindung weist nach dem Reibschweissvorgang eine Verkürzung von 3 bis 6 mm auf. Die Verkürzung nimmt zu mit der Reibzeit. Die Zugfestigkeit im Verbindungsbereich liegt gleich hoch oder höher als die Zugfestigkeit der verwendeten Prüfkörper. Wenn zwei Prüfkörper mit unterschiedlicher Zusammensetzung und unterschiedlicher Festigkeit zusammen geschweisst werden, ist die Zugfestigkeit im Verbindungsbereich nach dem Schweissen gleich oder grösser als die Zugfestigkeit des schwächeren Prüfkörpers. Bei allen Verbindungen liegt die Bruchstelle nicht in der Schweissverbindung selbst, sondern in dem Grundmaterial. Als Grundmaterial wurde verwendet: S355 (=St52), S420, GJS500, GJS600, SiboDur 450 und/oder SiboDur 700. Hierbei stehen die Zahlenangaben für die Zugfestigkeit des Grundmaterials in MPa. Hierbei steht SiboDur für eine Gusseisenlegierung mit Kugelgraphit, mit einer Zusammensetzung, die 3.0 bis 3.6 Gew.% C und 2.6 bis 3.2 Gew.% Si enthält und mit einem Gefüge, das zu 30 bis 90 % perlitisch ausgebildet ist. Die Verbindung wird als schweisstechnisch in Ordnung beurteilt.

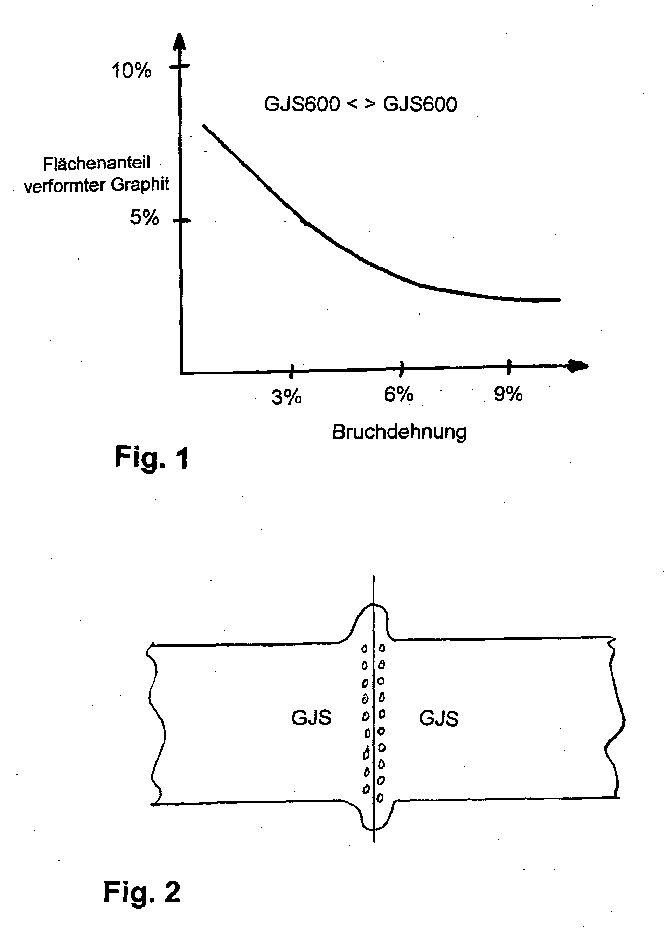

Aus **Figur 1** geht hervor, dass in Abhängigkeit des Deformationsgrades der Sphärolithen optimale Bruchdehnungswerte erreichbar sind. Die kugelförmige Graphitteilchen im Gusseisen (=Sphärolithen) werden beim Reibschweissen zu Ellipsoiden deformiert oder zumindest bereichsweise abgeplattet. Gemessen wird der Deformationsgrad als prozentualer Anteil der verformten Graphitteilchen an die untersuchte Schnittfläche. Bei den Reibschweissteilen, die nach dem vorliegenden Verfahren hergestellt werden, wird beobachtet, dass optimale Festigkeitswerte erreicht werden, wenn höchstens 20% der Sphärolithen verformt werden.

In **Figur 2** ist schematisch ein Reibschweissteil aus zwei Verbindungsteilen aus GJS mit verformten und unverformten Kugelgraphitteilchen dargestellt. Die Kugelgraphitteilchen im Verbindungsbereich sind höchstens 20%, vorzugsweise höchstens 10% deformiert, d.h. die Form weicht höchstens 20% von der Kugelform ab. Je mehr die Kugelgraphitteilchen im Verbindungsbereich zu Plättchen deformiert werden, desto schlechter werden die Festigkeitswerte im Verbindungsbereich.

Die Versuche zeigen, dass hochfeste Reibschweissverbindungen mit Prüfkörpern aus Gusseisenlegierungen mit Kugelgraphit erreicht werden können. Die Schweisszeiten liegen deutlich unter 30 Sekunden. Die Schweissverbindung selbst gelangt nur an den Schmelzfluss und kann fast spritzerfrei hergestellt werden. Im Bereich der Verbindungsnaht wird das Gefüge im tragenden Querschnitt nicht nachteilig verändert.

Das Reibschweissverfahren kann für Metallfügeteile wie beispielsweise Achsen, Wellen oder Rohre oder andere Antriebsteile, beispielsweise Radnabe, Achsstummel im Fahrzeug- und Maschinenbau angewendet werden. Auch Querträger oder andere Teile im Werkzeugbau können im Reibschweissverfahren hergestellt werden.

## Patentansprüche

1. Reibschweissverfahren zum Herstellen eines Metallfügeteiles, wobei zwei Verbindungsteile mit Kontaktflächen mit einem Reibdruck in Kontakt gebracht werden, wobei eines der Verbindungsteile relativ zum anderen Verbindungsteil bewegt wird, wobei nach einer Reibzeit die Relativbewegung abgebremst wird, wobei die Verbindungsteile während einer Stauchzeit mit einem Stauchdruck, der höher ist als der Reibdruck, gegeneinander gedrückt werden und wobei mindestens eines der Verbindungsteile aus Gusseisen mit Kugelgraphit (=GJS) ausgebildet ist, wobei im Verbindungsbereich höchstens 20% der Sphärolithen im Gusseisen mit Kugelgraphit deformiert werden und wobei das Gefüge im Gusseisen mit Kugelgraphit zu 30 bis 90 % perlitisch ausgebildet ist, **dadurch gekennzeichnet, dass** mindestens eines der Verbindungsteile aus Gusseisen mit Kugelgraphit mit einer nah-eutektischen Zusammensetzung, die 3.0 bis 3.6 Gew.% C und 2.6 bis 3.2 Gew.% Si enthält, gebildet ist, dass mindestens eines der Verbindungsteile aus Stahl mit einer Mindeststreckgrenze von 355 MPa gebildet ist und dass die Temperatur des Metallfügeteiles während und nach der Stauchzeit mittels induktive Erwärmung insgesamt etwa 12 bis 120 Sek. oberhalb von 750°C gehalten wird.

2. Reibschweissverfahren nach dem Anspruch 1, **dadurch gekennzeichnet, dass** die Reibzeit 10 bis 20 sec beträgt.

3. Reibschweissverfahren nach dem Anspruch 1, **dadurch gekennzeichnet, dass** der Druck während der Reibzeit 25 bis 45 MPa beträgt.

4. Reibschweissverfahren nach dem Anspruch 1, **dadurch gekennzeichnet, dass** der Druck während der Stauchzeit 100 bis 220 MPa beträgt.

5. Reibschweissverfahren nach dem Anspruch 1, **dadurch gekennzeichnet, dass** beide Verbindungsteile aus Gusseisen mit Kugelgraphit (=GJS) gebildet sind.

6. Reibschweissverfahren nach mindestens einem der Ansprüche 1 bis 5, **dadurch gekennzeichnet, dass** die Relativbewegung der Verbindungsteile eine rotierende Bewegung ist.

7. Reibschweissverfahren nach mindestens einem der Ansprüche 1 bis 6, **dadurch gekennzeichnet, dass** zumindest die Kontaktflächen der Verbindungsteile rotationssymmetrisch ausgebildet sind.

## Claims

1. friction welding, method for producing a joined metal part, wherein two connection parts with contact surfaces are brought into contract by means of friction pressure, wherein one of the connection parts is moved relative to the other connection part, wherein the relative movement is decelerated after a friction time, wherein, during a forging time, the connection parts are pressed against one another by means of a forging pressure which is higher than the friction pressure, and wherein at least one of the connection parts is formed from spheroidal graphite cast iron (GJS), wherein at most 20% of the spherulites in the spheroidal graphite cast iron are deformed in the connection region, and wherein 30 to 90% of the structure in the spheroidal graphite cast iron is pearlitic, **characterized in that** at least one of the connection parts is formed from spheroidal graphite cast iron with a near-eitectic composition, which comprises 3.0 to 3.6% by weight C and 2.6 to 3.2% by weight Si, **in that** at least one of the connection parts is formed from steel with a minimum yield strength of 355 MPa, and **in that** inductive heating is used to keep the temperature of the joined metal part above 750°C for a total of approximately 12 to 120 seconds during and after the forging time.

2. Friction welding method according to Claim 1, **characterized in that** the friction time is 10 to 20 seconds.

3. Friction welding method according to Claim 1, **characterized in that** the pressure during the friction time is 25 to 45 MPa.

4. Friction welding method according to Claim 1, **characterized in that** the pressure during the forging time is 100 to 220 MPa.

5. Friction welding method according to Claim 1, **characterized in that** both connection parts are formed from spheroidal graphite cast iron (GJS).

6. Friction welding method according to at least one of Claims 1 to 5, **characterized in that** the relative movement of the connection parts is a rotary movement.

7. Friction welding method according to at least one of Claims 1 to 6, **characterized in that** at least the contact surfaces of the connection parts have a rotationally symmetrical form.

## Revendications

1. Procédé de soudage par frottement destiné à former une pièce métallique composite, où
les surfaces de contact de deux pièces à relier sont mises en contact sous une pression de frottement,
l'un des deux emplacements de liaison est déplacé par rapport à l'autre emplacement de liaison,
le déplacement relatif est freiné après une durée de frottement,
les emplacements de liaison sont repoussés l'un contre l'autre pendant une durée d'écrasement sous une pression d'écrasement supérieure à la pression de frottement,
au moins l'une des pièces à relier étant formée de fonte à graphite sphéroïdal (= GJS),
au plus 20 % des sphérolithes de la fonte à graphite sphéroïdal étant déformés dans la zone de liaison et le réseau de la fonte à graphite sphéroïdal étant constitué de 30 à 90 % de perlite,
**caractérisé en ce que**
au moins l'une des pièces à relier en fonte à graphite sphéroïdal est formée d'une composition proche de l'eutectique qui contient de 3,0 à 3,6 % on poids de C et de 2,6 à 3,2 % en poids de Si,
**en ce qu'**au moins l'une des pièces à relier est formée d'acier dont la limite d'allongement minimale est de 355 MPa et
**en ce que** par chauffage par induction, la température de la pièce métallique composite pendant et après la durée d'écrasement est maintenue globalement pendant 12 à 120 s au-dessus de 750°C.

2. Procédé de soudage par frottement selon la revendication 1, **caractérisé en ce que** la durée de frottement est de 10 à 20 s.

3. Procédé de soudage par frottement selon la revendication 1, **caractérisé en ce que** la pression qui règne pendant la durée de frottement est de 25 à 45 MPa.

4. Procédé de soudage par frottement selon la revendication 1, **caractérisé en ce que** la pression qui règne pendant la durée d'écrasement est de 100 à 220 MPa.

5. Procédé de soudage par frottement selon la revendication 1, **caractérisé en ce que** les deux pièces relier sont formées de fonte à graphite sphéroïdal (= GJS).

6. Procédé de soudage par frottement selon au moins l'une des revendications 1 à 5, **caractérisé en ce que** le déplacement relatif des pièces à relier est un déplacement par rotation.

7. Procédé de soudage par frottement selon au moins l'une des revendications 1 à 6, **caractérisé en ce qu'**au moins les surfaces de contact des pièces à relier ont une configuration à symétrie centrale.
